# EUROPÄISCHE PATENTSCHRIFT

(11) **EP 2 871 089 B1**
(45) Veröffentlichungstag und Bekanntmachung des Hinweises auf die Patenterteilung: **25.12.2019**
(21) Anmeldenummer: 14401105.3
(22) Anmeldetag: 31.10.2014
(51) Int. Cl.: B60K 37/06, A01B 63/00

(54) **ANZEIGEVORRICHTUNG FÜR EINEN LANDWIRTSCHAFTLICHEN BORDRECHNER**
DISPLAY DEVICE FOR AN AGRICULTURAL ON-BOARD COMPUTER
DISPOSITIF D'AFFICHAGE POUR UN ORDINATEUR DE BORD AGRICOLE

(30) Priorität: 08.11.2013 DE 102013112295
(43) Veröffentlichungstag der Anmeldung: 13.05.2015
(73) Patentinhaber: Amazonen-Werke H. Dreyer GmbH & Co. KG, 49205 Hasbergen (DE)
(72) Erfinder: Kovermann, Timo, 49191 Belm (DE); Kretschmar, Tom, 04249 Leipzig (DE); Kühn, Christoph, 49824 Ringe (DE)

(56) Entgegenhaltungen:
- EP-A1- 2 165 591
- EP-A2- 2 042 019
- DE-A1-102004 048 083

## Beschreibung

Die Erfindung betrifft eine Anzeigevorrichtung für einen landwirtschaftlichen Bordrechner gemäß des Oberbegriffes des Patentanspruches 1.

Eine ähnliche Anzeigevorrichtung für einen Bordrechner ist in DE 10 2008 047 253 A1 beschrieben.

Die EP 2 042 019 A2 beschreibt eine Anzeigevorrichtung dessen Menü Piktogramme für verschiedene Bedienelemente aufweist.

Der Erfindung liegt die Aufgabe zugrunde, eine derartige Anzeigevorrichtung für landwirtschaftliche Bordrechner weiter zu bilden.

Diese Aufgabe wird erfindungsgemäß durch die Merkmale des Anspruchs 1 gelöst.

Dieses erfindungsgemäße Bedienungskonzept ist sehr intuitiv gestaltet. Es soll dem Anwender in einfacher und klarer Weise ermöglichen, die Arbeit mit der Pflanzenschutzspritze effektiv, schnell und ohne Fehler zu erledigen. Dazu sind die Hauptelemente Brühetank, Klarwassertank und Einspülschleuse klar strukturiert mit allen interessanten Funktionen in den Vordergrund gestellt. Die flache Menüstruktur mit nur zwei Menüebenen sorgt für schnelles Erfassen und Navigieren des Anwenders beim Arbeiten. Weiterhin wird dem Anwender der Prozessablauf einer Funktion auf einfache und deutliche Weise verdeutlicht. Dabei wird der optimale Kompromiss zwischen zu vielen Detailinformationen (somit zu viel Unübersichtlichkeit) und gar keinen Informationen, durch die Reduktion auf die Hauptabläufe erreicht. Die Prozessabläufe werden durch farbige Pfeile (Farben symbolisieren klares Wasser ist blau, oder kontaminierte Brühe ist grün) zwischen den Hauptelementen dargestellt und zeigen die Art und Richtung der Flüssigkeitsführung. Klare Zielstellung ist, dass der Anwender nur über seine beabsichtige Arbeit mit der Pflanzenschutzspritze nachdenken muss. Für den Anwender steht nun noch die durchführende Funktion an sich im Vordergrund (z.B. Befüllen des Haupttankes). Der Anwender muss sich nun nicht mehr mit einzelnen unverständlichen Schaltstellungen einzelner Ventile auseinandersetzen. Somit trägt dieses Bedienungskonzept nach einem sukzessiven Anstieg der Komplexität einer Pflanzenschutzspritze dazu bei, dass der Anwender seine Maschine wieder klar versteht, sie fehlerfrei und effizient bedienen kann.

Weitere Einzelheiten der Erfindung sind der Beispielsbeschreibung zu entnehmen.

Die Zeichnungen zeigen
- Fig.1: zeigt das Hauptmenü der erfindungsgemäßen Anzeigevorrichtung für einen Bordrechner einer Pflanzschutzspritze in Prinzipdarstellung,

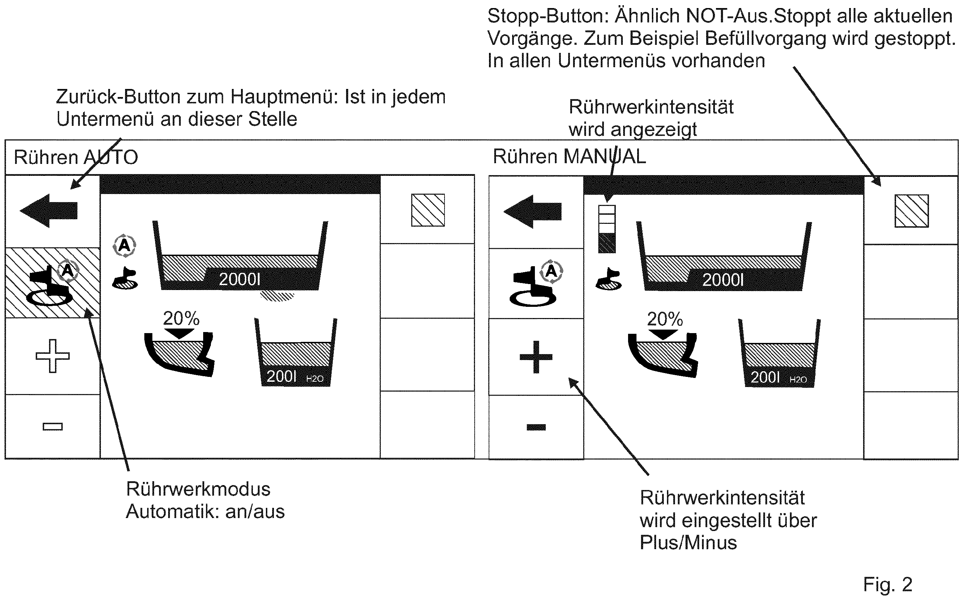

- Fig.2: zeigt das Rührmenü der erfindungsgemäßen Anzeigevorrichtung für einen Bordrechner einer Pflanzschutzspritze in Prinzipdarstellung,
- Fig.3: zeigt das Befüllmenü der erfindungsgemäßen Anzeigevorrichtung für einen Bordrechner einer Pflanzschutzspritze in Prinzipdarstellung,
- Fig.4: zeigt das Umpumpmenü der erfindungsgemäßen Anzeigevorrichtung für einen Bordrechner einer Pflanzschutzspritze in Prinzipdarstellung und
- Fig.5: zeigt das Reingungsmenü der erfindungsgemäßen Anzeigevorrichtung für einen Bordrechner einer Pflanzschutzspritze in Prinzipdarstellung,

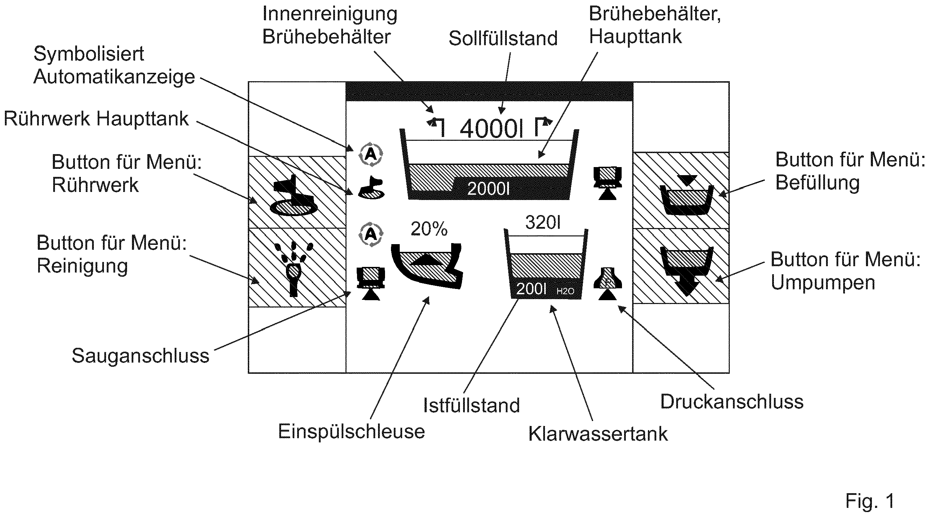

Auf dem Hauptbildschirm gemäß Fig. 1 werden die Hauptelemente der Flüssigkeitsführung einer Pflanzenschutzspritze gezeigt. Die Flüssigkeitsführung einer Pflanzenschutzspritze dient dem Ausbringen von Pflanzenschutzmitteln auf dem Feld. Zudem werden bei dem jeweiligen Element (Klarwassertank, Haupttank, Einspülschleuse) die aktuellen Füllstände angezeigt. Weiterhin werden Funktionselemente angezeigt. Sie symbolisieren ob eine Funktion aktiv ist (z.B. Innenreinigung). Zudem werden rechts bzw. links der Hauptelemente die Art der jeweiligen Befüllung dieser Elemente gekennzeichnet. Zum Beispiel wird in der aktuellen Darstellung der Klarwassertank durch den Druckanschluss versorgt. Des Weiteren werden Zustände der Hauptelemente gekennzeichnet. Die Einsopülschleuse befindet sich gerade in einem Automatik-Zustand. Zudem wird auch der Zustand des Rührwerkes des Haupttankes angezeigt. Es ist momentan in der Automatik-Funktion.

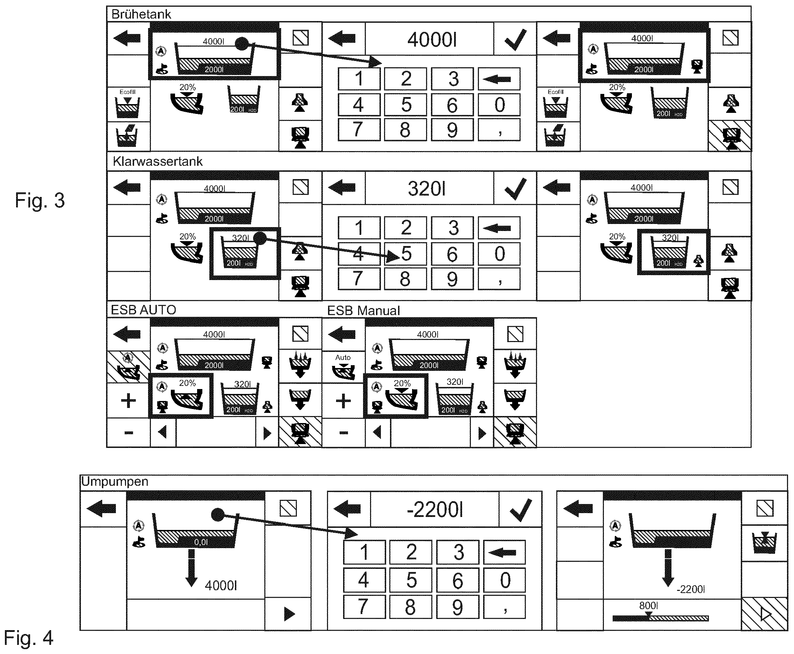

Das Befüllmenü gemäß Fig.3 zeigt in erläuternder Prinzipdarstellung die Anzeige- und Bedienpiktogramme für den Befüllvorganng. Dieses Befülmenü ist wieder in drei Hauptbereiche (Brühebehälter, Klarwassertank, Einspülschleuse) unterteilt. Durch Aktivieren dieser Hauptelemente, entweder durch Antippen (Touchscreen) oder durch Scrollauswahl, wird die jeweilige Funktion aktiv. Dann kann die Befüllung des Elementes gestartet werden. Dazu wird die Zielmenge der Befüllung eingegeben. Es kann dazu noch gewählt werden, von wo das Element versorgt werden soll. Entweder durch Druck- oder Saugbefüllung. Wenn der Vorgang gestartet ist, wird der Zielwert der Befüllung an dem Element angezeigt. Zusätzlich wird der aktuelle Wert angezigt. Dieser verändert sich stetig. Dadurch weiß der Anwender: Der Prozess läuft. Weiterhin nimmt der Anwender den jeweiligen Befüllweg (z.B. Druckanschluss) als hervorgehobenen Button war. Dieser einzelne Befüllvorgang, welcher aktiv ist, kann über antippen des hervorgehobenen Befüllweges wieder deaktiviert werden. Zugleich kann zu jeder Zeit über den NOT-Aus-Button jeder aktive Vorgang abgebrochen werden. Dieser Button ist immer ersichtlich und kann zu jedem Zeitpunkt betätigt werden, selbst wenn der Anwender gerade im Befüllmenü für den Frischwassertank ist, kann er immer zum Beispiel bei einer kritischen Schaumbildung den Befüllvorgang des Haupttankes abbrechen.

Beim Klarwassertank ist es das Gleiche.

Bei der Einspülschleuse hat der Anwender die Möglichkeit auf der rechten Button-Seite die Möglichkeit aus drei Versorgungswegen der Einspülschleuse auszuwählen (Haupttank, Klarwassertank, Sauganschluss). Weiterhin kann der Anwender auf der linken Button-Seite die Intensität der Absaugung manuell einstellen oder auf Automatik schalten. Im unteren Bereich können Befüllinformationen angezeigt und durch den Anwender bestätigt werden.

In dem Umpumpmenü gemäß Fig. 4 kann der Anwender entscheiden, wie viel Flüssigkeit er aus dem Haupttank in eine andere Maschine oder ähnliches umfüllen möchte.

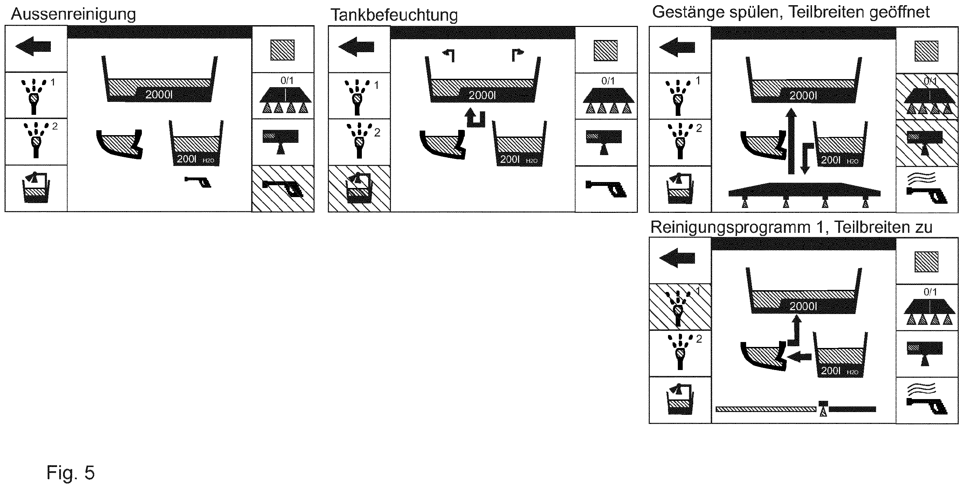

In dem Reinigungsmenü gemäß Fig.5 kann der Anwender zwischen verschiedenen Reinigungsfunktionen wählen. Dies sind Reinigungsprogramm 1 und 2, Umlaufreinigung, Gestängespülen und Außenreinigung. Die Prozesse können aktiviert werden. Bei Aktivierung wird dem Anwender der aktuelle Prozessablauf visuell verdeutlicht. Zum einen werden dem Anwender über eine Pfeildarstellung gezeigt, von welchem Hauptelement zu welchem Hauptelement Flüssigkeit transportiert wird. Der Anwender erfährt somit direkt eine Fortschrittsanzeige und kann nachvollziehen, welche Prozesskette gerade abläuft. Somit trägt dieses System in einer einfachen, übersichtlichen und sehr leicht zu verstehenden Art und Weise dazu bei, dass der Anwender sein Handeln klar versteht. Diese Transparenz trägt in hohem Maße zur Fehlervermeidung bei.

## Patentansprüche

1. Anzeigevorrichtung für einen landwirtschaftlichen Bordrechner einer Pflanzenschutzspritze mit einer integrierten Bedien- und Anzeigeeinheit, wobei die Anzeigeeinheit selbsterklärende Piktogramme aufweist, die Anzeigevorrichtung ist **dadurch gekennzeichnet, dass** die Piktogramme so gestaltet und miteinander verknüpft sind, dass der Bediener zu den und durch die verschiedenen Bedienschritte der Pflanzenschutzspritze geführt wird, und dass zumindest die Hauptelemente Brühetank, Klarwassertank und Einspülschleuse und aktivierte Funktionalitäten, welche ein oder mehrere Hauptelemente betreffen, als Piktogramme dargestellt werden.

## Claims

1. Display device for an agricultural on-board computer of a crop sprayer with an integrated operating and display unit, wherein the display unit has self-explanatory pictograms, the display device is **characterized in that** the pictograms are designed and linked to one another in such a way that the operator is guided to and through the various operating steps of the crop sprayer, and **in that** at least the main elements, the spray tank, fresh water tank and induction hopper, and activated functionalities concerning one or more main elements are represented as pictograms.

## Revendications

1. Dispositif d'affichage pour un ordinateur de bord agricole d'un pulvérisateur de produits phytosanitaires, comprenant une unité de commande et d'affichage intégrée, l'unité d'affichage présentant des pictogrammes intuitifs, le dispositif d'affichage étant **caractérisé en ce que** les pictogrammes sont configurés et associés les uns aux autres de telle sorte que l'utilisateur soit guidé vers et par les différentes étapes de commande du pulvérisateur de produits phytosanitaires, et **en ce qu'**au moins les éléments principaux constitués par la cuve, le réservoir d'eau claire, et le bac de mélange, et des fonctionnalités activées qui concernent un ou plusieurs éléments principaux, sont représentés sous forme de pictogrammes.
